# NEUE EUROPÄISCHE PATENTSCHRIFT

(11) **EP 2 991 779 B2**
(45) Veröffentlichungstag und Bekanntmachung des Hinweises auf die Entscheidung über den Einspruch: **11.01.2023**
(45) Hinweis auf die Patenterteilung: 14.12.2016
(21) Anmeldenummer: 14720974.6
(22) Anmeldetag: 02.05.2014
(51) Int. Cl.: B21B 13/00, B21B 45/00

(54) **WARMWALZWERK**
HOT-ROLLING MILL
LAMINOIR À CHAUD

(30) Priorität: 03.05.2013 DE 102013208092; 27.09.2013 DE 102013219507
(43) Veröffentlichungstag der Anmeldung: 09.03.2016
(73) Patentinhaber: SMS group GmbH, 40237 Düsseldorf (DE)
(72) Erfinder: SEIDEL, Jürgen, 57223 Kreuztal (DE); KUNZE, Volker, 57076 Siegen (DE); KIPPING, Matthias, 57562 Herdorf (DE); SUDAU, Peter, 57271 Hilchenbach (DE)
(74) Vertreter: Klüppel, Walter
(86) Internationale Anmeldenummer: PCT/EP2014/058963
(87) Internationale Veröffentlichungsnummer: WO 2014/177679

(56) Entgegenhaltungen:
- WO-A1-2012/080368
- JP-A- S6 171 121
- JP-A- S56 119 615

## Beschreibung

Die Erfindung betrifft ein Warmwalzwerk, umfassend eine Fertigstraße zum Fertigwalzen eines Walzguts, insbesondere eines Bandes, wobei die Fertigstraße eine Anzahl Walzgerüste aufweist, die sich in eine Förderrichtung des Walzguts anschließen, wobei zumindest zwischen zwei in Förderrichtung aufeinander folgenden Walzgerüsten mindestens ein Wärmedämmelement angeordnet ist, mit dem das Walzgut gegen Wärmeverluste abgeschirmt werden kann.

Warme Dick- bzw. Dünnbrammen, Bleche oder Bänder geben beim Transport Energie an die Umgebung ab. Um diese Temperaturverluste zu reduzieren, werden Wärmedämmhauben eingesetzt, die ober- oder unterhalb oder neben dem warmen Produkt angeordnet sind. Eine gattungsgemäße Lösung offenbaren die WO 2012/080368 A1 und die JP S61 71121 A. Bekannt ist es weiter, in einer Warmbandstraße Wärmedämmhauben für den Rollgang zwischen Vor- und Fertigstraße einzusetzen. Hierzu wird auf die EP 0 005 340 B1, auf die EP 0 059 093 B1, auf die US 4 595 358 und auf die US 5 711 175 hingewiesen, wo entsprechende Wärmedämmelemente beschrieben werden. In diesen Druckschriften ist auch beschrieben, wie Wärmedämmelemente ausgestaltet werden können, um sie effizient und robust zu machen.

Der Erfindung liegt die Aufgabe zugrunde, ein Warmwalzwerk so fortzubilden, dass das Bandtemperatur- und Walzkraftniveau beim Fertigwalzen verbessert werden kann.

Die Lösung dieser Aufgabe durch die Erfindung ist dadurch gekennzeichnet, dass im Bereich des mindestens einen Wärmedämmelements eine Luftabblasung und/oder eine Wasserquerabspritzung angeordnet ist.

Bevorzugt sind zwischen allen Walzgerüsten der Fertigstraße Wärmedämmelemente angeordnet.

Der Abstand zwischen zwei Walzgerüsten in Förderrichtung beträgt dabei bevorzugt weniger als 25 m, vorzugsweise sogar weniger als 7 m.

Dabei ist bevorzugt vorgesehen, dass ein Längenbereich von mindestens 25 % des Abstands zwischen zwei Walzgerüsten mit mindestens einem Wärmedämmelement versehen ist. Bevorzugt ist jedoch praktisch der gesamte Abstand zwischen den Walzgerüsten mit Wärmedämmelementen versehen.

Das mindestens eine Wärmedämmelement oder Teile desselben können an das Walzgerüst direkt angebaut oder in dieses integriert sein oder an ein Gerüst-Einbauteil angebaut sein.

Zwischen dem Wärmedämmelement und dem Walzgut oder neben dem Wärmedämmelement kann mindestens ein Schutzelement angeordnet sein, insbesondere in Form einer Rippe oder einer Leiste. Das Schutzelement kann mit dem Wärmedämmelement verbunden sein. Es können auch mehrere Schutzelemente vorhanden sein, die miteinander verbunden sind. Das mindestens eine Schutzelement besteht dabei bevorzugt aus einem temperaturbeständigen Material.

Das mindestens eine Schutzelement kann des weiteren mit einer Kühlung versehen sein.

Eine Anzahl Schutzelemente können zwischen zwei Walzgerüsten vorgesehen werden, wobei die Schutzelemente, die zwischen zwei Walzgerüsten in Förderrichtung aufeinander folgen, in Breitenrichtung des Walzguts zueinander versetzt angeordnet sind.

Die Schutzelemente können gerade verlaufen und/oder zur Förderrichtung einen Winkel einschließen, vorzugsweise einen solchen zwischen 0° und 45°.

Das mindestens eine Wärmedämmelement kann verschwenkbar und/oder translatorisch beweglich angeordnet sein.

Der Bereich zwischen zwei Walzgerüsten ist bevorzugt frei von einem Rollgang. Bei größerem Gerüstabstand können Strecken außerhalb der Gerüstbereiche mit einem Rollgang versehen sein. Indes ist bevorzugt vorgesehen, dass der Bereich zwischen zwei Walzgerüsten mit einem Überleittisch, einem Führungstisch und/oder einem Looper versehen ist.

Das mindestens eine Wärmedämmelement weist bevorzugt ein keramisches Material auf bzw. es besteht aus einem solchen.

Das mindestens eine Wärmedämmelement kann weiterhin mit einem Schutzblech versehen sein, um es vor Wasser zu schützen.

Bei dem Wärmedämmelement handelt es sich bevorzugt um ein Absorptionsdämmelement oder um ein Reflexionsdämmelement.

Vorgesehen ist demgemäß, dass bei relativ geringem Gerüstabstand die Gerüsteinbauten so ausgestattet werden, dass Wärmedämmhauben darin integrierbar sind. Die Wärmedämmung ist zwischen mindestens zwei Fertiggerüsten angeordnet, deren Gerüstabstand kleiner als 25 m ist, bevorzugt weniger als 7 m. Die Wärmedämmung ist in den Gerüsteinbauten angebaut oder integriert, wie beispielsweise Überleittisch, Loopertisch und Ein- und Auslaufführung, Halterungen der Abstreifer bzw. Wasserabweiser, Rahmen auf der Ober- und/oder Unterseite des Bandes und/oder seitlich des Bandes.

Zum Schutz der Wärmedämmung vor einer Zerstörung durch Bandkontakt (Skiup, Ski-down, Walzhavarien) können Rippen oder Leisten in bestimmten Abständen über der Breite an den Gerüsteinbauten befestigt oder zwischen den Gerüsteinbauten angeordnet und unterhalb oder zwischen den Rippen oder Leisten die Wärmedämmhauben platziert werden. Die Rippen können als Versteifung miteinander verbunden sein. Die Rippen oder Leisten sollen auch die Führung bzw. den Transport des Bandes von Gerüst zu Gerüst begünstigen.

Die Rippen oder Leisten bestehen aus einem temperaturbeständigen Material oder werden von innen gekühlt; sie können kälter bzw. anders temperiert sein als die dazwischen angeordneten Wärmedämmelemente.

Die Rippen oder Leisten können zusammen mit den Wärmedämmplatten so angeordnet werden, dass die Wärmedämmwirkung über der Breite möglichst gleichmäßig ist. Um eine solche möglichst gleichmäßige Wärmedämmwirkung über der Breite des Bandes sicherzustellen und/oder eine lokale Kühlwirkung durch eventuell kältere Rippen bzw. Leisten zu vermeiden bzw. zu verteilen, ist bevorzugt eine versetzte Anordnung der Rippen über der Breite von Gerüst zu Gerüst oder vom Überleittisch zu anderen rippenbehafteten Einbauten und von der Oberseite zu der Unterseite vorgesehen.

Alternativ oder zusätzlich zur versetzten Anordnung können die Rippen bzw. Leisten schräg gegenüber der Walzrichtung (gesehen in der Draufsicht) - d. h. in einem Winkel - angeordnet sein, um die genannte Gleichmäßigkeit über der Breite sicherzustellen.

Die Wärmedämmplatten können bei Bedarf, z. B. um die Beobachtung des Bandkopfes beim Transport zwischen den Gerüsten oder ein Schrotträumen zu gewährleisten, weggeschwenkt werden. Auch können die gedämmten Ein- und Auslaufführungen zum Walzenwechsel aus dem Gerüstbereich (Walzenbereich) herausgefahren werden.

Die Wärmedämmung zwischen den Fertiggerüsten wird vorteilhaft für eine Walzanlage verwendet, die neben dem Batchbetrieb bevorzugt auch zum Endloswalzen (bei der z. B. die Gießanlage und die Walzanlage verbunden sind) eingesetzt wird. Hierbei wirkt sich die Wärmedämmwirkung besonders positiv zur Erhöhung der Endwalztemperatur und/oder zur Verminderung des Energieverbrauchs infolge des geringeren Heizbedarfs vor und innerhalb der Fertigstraße aus. Der Effekt ist insbesondere wichtig und vorteilhaft bei einem Produkt-Massenstrom (ausgedrückt als Produkt von Dicke des Walzguts und Geschwindigkeit) von weniger als 650 mm x m/min und ist besonders vorteilhaft bei einem Massenstrom von weniger als 500 mm x m/min.

Zwischen den Gerüsten wird vorzugsweise kein Rollgang, sondern gedämmte Überleittische, Führungstische und/oder Looper eingesetzt.

Es können Luftabblasungen und/oder Wasserquerabspritzungen vorgesehen sein, um von Bereichen mit Wärmedämmeinrichtung (vor allem auf der Unterseite) Wasser fern zu halten. Weiterhin sind die Bauteile in diesem Bereich möglichst mit Innenkühlung zu versehen.

Die Wärmedämmhaube, die bevorzugt eine Keramikdämmung umfasst, kann so mit einem Schutzblech verkleidet oder/und auf der Rückseite eines Rahmens (z. B. oberer Abstreiferhalter) befestigt sein, dass aufgebrachtes Wasser, z. B. der Zwischengerüstkühlung oder Walzenkühlung oder anderes Wasser - davon fern gehalten wird.

Die Wärmedämmplatten sind dabei für sich oder zusammen mit den Gerüsteinbauten modular tauschbar aufgebaut.

Der gedämmte Bereich zwischen den Fertiggerüsten wird dabei bevorzugt so maximiert, dass zwischen den Gerüsten mehr als 25 % des Gerüstabstands gedämmt wird.

Beispielsweise wird die Zwischengerüstkühlung in die Antriebswelle des Loopers integriert. Auch können die Seitenführungen durch Bewegungselemente verstellt werden, die durch Bohrungen in bzw. durch den Ständer geführt werden oder unterhalb der Führungen zwischen dem Ständer angeordnet sind. Durch diese Maßnahmen werden die mit Dämmungen ausgestatteten Gerüstbereiche vergrößert.

Der Effekt der Dämmhauben innerhalb der Fertigstraße wird optimiert. Es sind z. B. dickere Einfahrbänder vorgesehen, mit denen die Dämmhauben warm gefahren bzw. erhitzt werden. Dabei kann z. T. die aktive Gerüstanzahl reduziert werden, um eine ausreichend hohe Endwalztemperatur zu erzielen. Auch können Temperatur unkritische Bänder als Vorlaufbänder dienen. Anschließend werden dünnere Bänder gewalzt oder/und Bänder, die höhere Endwalztemperaturen erfordern und die die warmen Dämmhauben optimal nutzen.

Die Wirkung der Wärmedämmhauben innerhalb der Fertigstraße wird dabei bevorzugt von einem Prozessmodell zum Setzen der Straße (Abnahmeverteilung, Motorbelastung, Walzkraft, Geschwindigkeit, Temperatur, etc.) berücksichtigt. Hierzu werden insbesondere das dynamische Verändern des Temperaturzustands der Wärmedämmhauben-Oberflächen während der Walz- und ggf. Pausenzeit sowie das Verhältnis der Fläche der Rippen bzw. Leisten zur Wärmedämmfläche einbezogen.

Bei der Wärmedämmung kann es sich um eine Absorptionsdämmung handeln, bei der sich die Dämmoberfläche auf hohe Temperaturen erwärmt. Es ist aber auch eine Reflexionsdämmung möglich, bei der die eingestrahlte Wärme reflektiert wird. Es hat sich als sehr vorteilhaft herausgestellt, dass bei der erfindungsgemäßen Ausgestaltung innerhalb einer mehr-gerüstigen Warmbandstraße eine positive Beeinflussung des Walzkraftniveaus infolge der Verminderung von Temperaturverlusten erreicht werden kann. Gleichermaßen werden Wärmeverluste reduziert und der Bandtemperaturhaushalt günstig beeinflusst.

Z. T. unterscheiden sich die Walzgerüste baulich voneinander oder werden örtlich etwas versetzt angeordnet und werden deshalb sprachlich in Vor- und Fertigstraße unterteilt.

Wird eine mehrgerüstige Vorstraße eingesetzt, die die oben spezifizierten Bedingungen erfüllt, sind entsprechende Dämmmaßnahmen auch innerhalb einer Vorstraße vorgesehen.

In dem Text und in den Ansprüchen ist der Begriff Fertigstraße geprägt. Hat eine Vorstraße jedoch die Charakteristik der spezifizierten Fertigstraße bestehend aus Gerüsten mit entsprechend geringem Abstand zu den Nachbargerüsten, so gilt der Schutzumfang auch für die sogenannte Vorstraße oder anders bezeichnete Gerüste.

In der Zeichnung ist ein Ausführungsbeispiel der Erfindung dargestellt. Es zeigen:
- Fig. 1: schematisch die Seitenansicht eines Teils einer Fertigstraße eines Warmwalzwerks und
- Fig. 2: schematisch die zugehörige Draufsicht.

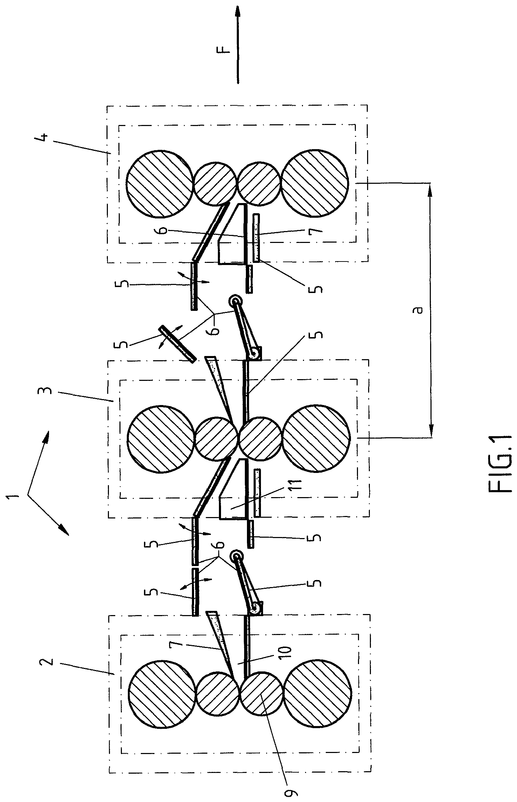

In den Figuren ist ein Teil einer Fertigstraße 1 skizziert, von der vorliegend drei Walzgerüste 2, 3 und 4 zu erkennen sind. Jedes Walzgerüst 2, 3, 4 hat ein Paar Arbeitswalzen 9 und diese abstützende Stützwalzen. Die Walzgerüste 2, 3, 4 folgen in Förderrichtung F aufeinander und walzen ein nicht dargestelltes Band. Dabei befinden sich die Walzgerüste 2, 3, 4 in einem Abstand a (s. Fig. 1).

Wesentlich ist, dass zwischen jeweils zwei in Förderrichtung F aufeinander folgenden Walzgerüsten 2 und 3 bzw. 3 und 4 Wärmedämmelemente 5 angeordnet sind. Mit diesen wird das Band gegen Wärmeverluste abgeschirmt.

Die Wärmedämmelemente 5 können dabei mit einem Schutzblech (Abdeckblech) 7 versehen sein, um sie vor Wasser zu schützen. Das Schutzblech 7 dient insofern als Wasserabweiser.

Ein weiteres vorteilhaftes Merkmal besteht darin, dass die Wärmedämmelemente 5 mit Schutzelementen 6 in Form von Rippen versehen sind, um sie einerseits zu stabilisieren und sie andererseits vor Kollisionen mit dem zu walzenden Band zu schützen.

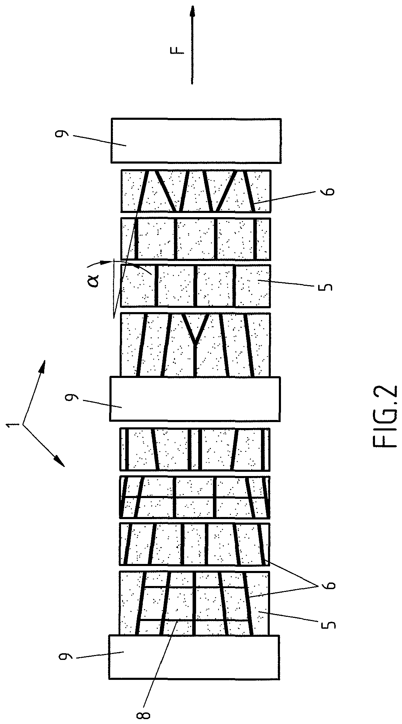

Dabei kann insbesondere in Fig. 2 gesehen werden, dass die Rippen 6 symmetrisch zur Mitte des Bandes angeordnet sind. Gleichzeitig ist ein Versatz in Breitenrichtung vorgesehen, was die Abfolge der einzelnen Wärmedämmelemente 5 in Förderrichtung F anbelangt. Dies ermöglicht einen gleichmäßigen thermischen Verlauf.

Zwecks Versteifung sind ferner Querverstrebungen 8 vorgesehen, über die die Rippen 6 verbunden sind. Es ergibt sich insofern eine stabile Struktur. Die Rippen 6 können dabei unter einem Winkel α zur Förderrichtung F verlaufen, wie es aus Fig. 2 ersichtlich ist.

Mit Pfeilen ist in Fig. 1 ferner angedeutet, dass die Wärmedämmelemente 5 verschwenkbar angeordnet sein können, um sie bei Bedarf aus ihrer Arbeitsposition heraus bewegen zu können.

Die Wärmedämmelemente 5 können dabei im Bereich von Auslaufiführungen 10 bzw. Einlaufführungen 11 angeordnet sein, um auch diesen Abschnitt effizient thermisch zu isolieren.

### Bezugszeichenliste:

- 1: Fertigstraße
- 2: Walzgerüst
- 3: Walzgerüst
- 4: Walzgerüst
- 5: Wärmedämmelement
- 6: Schutzelement (Rippe, Leiste)
- 7: Schutzblech
- 8: Querverstrebung
- 9: Arbeitswalze
- 10: Auslaufführung
- 11: Einlaufführung

- F: Förderrichtung
- a: Abstand zwischen zwei Walzgerüsten
- α: Winkel

## Patentansprüche

1. Warmwalzwerk, umfassend eine Fertigstraße (1) zum Fertigwalzen eines Walzguts, insbesondere eines Bandes, wobei die Fertigstraße (1) eine Anzahl Walzgerüste (2, 3, 4) aufweist, die sich in eine Förderrichtung (F) des Walzguts anschließen, wobei zumindest zwischen zwei in Förderrichtung (F) aufeinander folgenden Walzgerüsten (2, 3, 4) mindestens ein Wärmedämmelement (5) angeordnet ist, mit dem das Walzgut gegen Wärmeverluste abgeschirmt werden kann,
**dadurch gekennzeichnet,**
**dass** im Bereich des mindestens einen Wärmedämmelements (5) eine Luftabblasung und/oder eine Wasserquerabspritzung angeordnet ist, um von Bereichen mit Wärmedämmeinrichtung Wasser fern zu halten.

2. Warmwalzwerk nach Anspruch 1, **dadurch gekennzeichnet, dass** zwischen allen Walzgerüsten (2, 3, 4) Wärmedämmelemente (5) angeordnet sind.

3. Warmwalzwerk nach Anspruch 1 oder 2, **dadurch gekennzeichnet, dass** der Abstand (a) zwischen zwei Walzgerüsten (2, 3, 4) in Förderrichtung (F) weniger als 25 m beträgt, vorzugsweise weniger als 7 m.

4. Warmwalzwerk nach einem der Ansprüche 1 bis 3, **dadurch gekennzeichnet, dass** ein Längenbereich von mindestens 25 % des Abstands (a) zwischen zwei Walzgerüsten (2, 3, 4) mit mindestens einem Wärmedämmelement (5) versehen ist.

5. Warmwalzwerk nach einem der Ansprüche 1 bis 4, **dadurch gekennzeichnet, dass** das mindestens eine Wärmedämmelement (5) oder Teile desselben an das Walzgerüst (3, 4, 5) direkt angebaut oder in dieses integriert oder an ein Gerüst-Einbauteil angebaut ist.

6. Warmwalzwerk nach einem der Ansprüche 1 bis 5, **dadurch gekennzeichnet, dass** zwischen dem Wärmedämmelement (5) und dem Walzgut oder neben dem Wärmedämmelement (5) mindestens ein Schutzelement (6), insbesondere in Form einer Rippe oder einer Leiste, angeordnet ist.

7. Warmwalzwerk nach Anspruch 6, **dadurch gekennzeichnet, dass** das Schutzelement (6) mit dem Wärmedämmelement (5) verbunden ist.

8. Warmwalzwerk nach Anspruch 6 oder 7, **dadurch gekennzeichnet, dass** mehrere Schutzelemente (6) vorhanden sind, die miteinander verbunden sind.

9. Warmwalzwerk nach einem der Ansprüche 6 bis 8, **dadurch gekennzeichnet, dass** das mindestens eine Schutzelement (6) aus einem temperaturbeständigen Material besteht.

10. Warmwalzwerk nach einem der Ansprüche 6 bis 9, **dadurch gekennzeichnet, dass** das mindestens eine Schutzelement (6) mit einer Kühlung versehen ist.

11. Warmwalzwerk nach einem der Ansprüche 6 bis 10, **dadurch gekennzeichnet, dass** eine Anzahl Schutzelemente (6) zwischen zwei Walzgerüsten (2, 3, 4) vorhanden sind, wobei die Schutzelemente (6), die zwischen zwei Walzgerüsten (2, 3, 4) in Förderrichtung (F) aufeinander folgen, in Breitenrichtung des Walzguts zueinander versetzt angeordnet sind.

12. Warmwalzwerk nach einem der Ansprüche 6 bis 11, **dadurch gekennzeichnet, dass** die Schutzelemente (6) gerade verlaufen und/oder zur Förderrichtung (F) einen Winkel (α) einschließen, vorzugsweise zwischen 0° und 45°.

13. Warmwalzwerk nach einem der Ansprüche 1 bis 12, **dadurch gekennzeichnet, dass** das mindestens eine Wärmedämmelement (5) verschwenkbar und/oder translatorisch beweglich angeordnet ist.

14. Warmwalzwerk nach einem der Ansprüche 1 bis 13, **dadurch gekennzeichnet, dass** der Bereich zwischen zwei Walzgerüsten (2, 3, 4) vorzugsweise frei von einem Rollgang ist.

15. Warmwalzwerk nach einem der Ansprüche 1 bis 14, **dadurch gekennzeichnet, dass** der Bereich zwischen zwei Walzgerüsten (2, 3, 4) mit einem Überleittisch, einem Führungstisch und/oder einem Looper versehen ist.

16. Warmwalzwerk nach einem der Ansprüche 1 bis 15, **dadurch gekennzeichnet, dass** das mindestens eine Wärmedämmelement (5) ein keramisches Material aufweist oder aus einem solchen besteht.

17. Warmwalzwerk nach einem der Ansprüche 1 bis 16, **dadurch gekennzeichnet, dass** das mindestens eine Wärmedämmelement (5) mit einem Schutzblech (7) versehen ist, um es vor Wasser zu schützen.

18. Warmwalzwerk nach einem der Ansprüche 1 bis 17, **dadurch gekennzeichnet, dass** das mindestens eine Wärmedämmelement (5) ein Absorptionsdämmelement ist.

19. Warmwalzwerk nach einem der Ansprüche 1 bis 17, **dadurch gekennzeichnet, dass** das mindestens eine Wärmedämmelement (5) ein Reflexionsdämmelement ist.

20. Warmwalzwerk nach einem der vorangegangenen Ansprüche, **dadurch gekennzeichnet, dass** die Dämmhauben innerhalb der Fertigstraße durch Einfahr- bzw. Vorlaufbänder erwärmt werden und anschließend temperaturkritische Bänder (z. B. dünne Bänder) gewalzt werden, die die warmen Dämmhauben nutzen.

21. Warmwalzwerk nach einem der vorangegangenen Ansprüche, **dadurch gekennzeichnet, dass** die Wirkung der Wärmedämmhauben innerhalb der Fertigstraße von einem Prozessmodell zum Setzen der Walzstraße und/oder beim dynamischen Verändern der Temperatur während des Walzprozesses berücksichtigt wird.

22. Warmwalzwerk nach einem der vorangegangenen Ansprüche, **dadurch gekennzeichnet, dass** die Wärmedämmung innerhalb der Fertigstraße bevorzugt beim Endloswalzen bei einem Produkt-Massenstrom ausgedrückt in Dicke x Geschwindigkeit von kleiner als 650 mm x m/min und besonders vorteilhaft bei einem Massenstrom von kleiner als 500 mm x m/min eingesetzt wird.

## Claims

1. Hot-rolling mill comprising a finishing train (1) for rolling a rolling material, particularly a strip, to finished state, wherein the finishing train (1) comprises a plurality of roll stands (2, 3, 4) successive in a conveying direction (F) of the rolling material, wherein at least one thermal insulating element (5) by which the rolling material can be shielded from heat loss is arranged at least between two roll stands (2, 3, 4) successive in conveying direction (F),
**characterised in that**
an air blowing device and/or a water transverse spraying device is or are arranged in the region of the at least one thermal insulating element (5), so as to keep water away from regions with thermal insulating equipment.

2. Hot-rolling mill according to claim 1, **characterised in that** thermal insulating elements (5) are arranged between all roll stands (2, 3, 4).

3. Hot-rolling mill according to claim 1 or 2, **characterised in that** the spacing (a) between two roll stands (2, 3, 4) in conveying direction (F) is less than 25 metres, preferably less than 7 metres.

4. Hot-rolling mill according to any one of claims 1 to 3, **characterised in that** a length region of at least 25% of the spacing (a) between two roll stands (2, 3, 4) is provided with at least one thermal insulating element (5).

5. Hot-rolling mill according to any one of claims 1 to 4, **characterised in that** the at least one thermal insulating element (5) or parts thereof are directly installed at or integrated in the roll stand (3, 4, 5) or attached to a stand fitting.

6. Hot-rolling mill according to any one of claims 1 to 5, **characterised in that** at least one protective element (6), particularly in the form of a rib or a strip, is arranged between the thermal insulating element (5) and the rolling material or near the thermal insulating element (5).

7. Hot-rolling mill according to claim 6, **characterised in that** the protective element (6) is connected with the thermal insulating element (5).

8. Hot-rolling mill according to claim 6 or 7, **characterised in that** a plurality of interconnected protective elements (6) is present.

9. Hot-rolling mill according to any one of claims 6 to 8, **characterised in that** the at least one protective element (6) consists of a temperature-resistant material.

10. Hot-rolling mill according to any one of claims 6 to 9, **characterised in that** the at least one protective element (6) is provided with a cooling device.

11. Hot-rolling mill according to any one of claims 6 to 10, **characterised in that** a plurality of protective elements (6) is present between two roll stands (2, 3, 4), wherein the protective elements (6), which follow one another in conveying direction (F), between two roll stands (2, 3, 4) are arranged to be offset relative to one another in the width direction of the rolling material.

12. Hot-rolling mill according to any one of claims 6 to 111, **characterised in that** the protective elements (6) extend rectilinearly and/or include an angle (α), preferably between 0°and 45°, with the conveying direction (F).

13. Hot-rolling mill according to any one of claims 1 to 12, **characterised in that** at least one thermal insulating element (5) is arranged to be pivotable and/or translationally movable.

14. Hot-rolling mill according to any one of claims 1 to 13, **characterised in that** the region between two roll stands (2, 3, 4) is preferably free of a roller path.

15. Hot-rolling mill according to any one of claims 1 to 14, **characterised in that** the region between two roll stands (2, 3, 4) is provided with a transfer table, a guide table and/or a looper.

16. Hot-rolling mill according to any one of claims 1 to 15, **characterised in that** the at least one thermal insulating element (5) comprises a ceramic material or consists of such.

17. Hot-rolling mill according to any one of claims 1 to 16, **characterised in that** the at least one thermal insulating element (5) is provided with a protective plate (7) to protect it from water.

18. Hot-rolling mill according to any one of claims 1 to 17, **characterised in that** the at least one thermal insulating element (5) is an absorption insulating element.

19. Hot-rolling mill according to any one of claims 1 to 17, **characterised in that** the at least one thermal insulating element (5) is a reflection insulating element.

20. Hot-rolling mill according to any one of the preceding claims, **characterised in that** the insulating hoods within the finishing train are heated by entry strips or advance strips and subsequently temperature-critical strips (for example thin strips), which use the hot insulating hoods, are rolled.

21. Hot-rolling mill according to any one of the preceding claims, **characterised in that** the action of the thermal insulating hoods within the finishing train is taken into consideration by a process model for setting the rolling train and/or in the dynamic changing of temperature during the rolling process.

22. Hot-rolling mill according to any one of the preceding claims, **characterised in that** the thermal insulation within the finishing train is preferably used in endless rolling with a product mass flow expressed in thickness x speed of less than 650 mm x m/min, and particularly advantageously with a mass flow of less than 500 mm x m/min.

## Revendications

1. Unité de laminage à chaud qui comprend un train finisseur (1) destiné au laminage de finition d'un produit de laminage, en particulier d'une bande ; dans laquelle le train finisseur (1) présente une multitude de cages de laminoir (2, 3, 4) qui se raccordent dans une direction de transport (F) du produit de laminage ; dans laquelle au moins au moins un élément (5) qui procure une isolation thermique est disposé entre deux cages de laminoir (2, 3, 4) qui se suivent l'une l'autre dans la direction de transport (F), avec lequel le produit de laminage peut être protégé contre des pertes de chaleur ;
**caractérisée**
**en ce qu'**un soufflage d'air et/ou une aspersion transversale d'eau est/sont disposé(s) dans la zone dudit au moins un élément (5) qui procure une isolation thermique dans le but de maintenir l'eau à distance de zones avec de l'installation procurant l'isolation thermique.

2. Unité de laminage à chaud conformément à la revendication 1, **caractérisée en ce que** des éléments (5) qui procure une isolation thermique sont disposés entre toutes les cages de laminoir (2, 3, 4).

3. Unité de laminage à chaud conformément à la revendication 1 ou 2, **caractérisée en ce que** la distance (a) entre deux cages de laminoir (2, 3, 4) dans la direction de transport (F) est inférieure à 25 m, de préférence est inférieure à 7 m.

4. Unité de laminage à chaud conformément à l'une quelconque des revendications 1 à 3, **caractérisée en ce qu'**une zone en longueur qui représente au moins 25 % de la distance (a) entre deux cages de laminoir (2, 3, 4) est équipée d'au moins un élément (5) qui procure une isolation thermique.

5. Unité de laminage à chaud conformément à l'une quelconque des revendications 1 à 4, **caractérisée en ce que** ledit au moins un élément (5) qui procure une isolation thermique ou des parties de ce dernier est/sont monté(es) directement contre la cage de laminoir (3, 4, 5) ou est/sont intégré(es) dans cette dernière ou sont monté(es) contre une pièce rapportée de la cage de laminoir.

6. Unité de laminage à chaud conformément à l'une quelconque des revendications 1 à 5, **caractérisée en ce que**, entre l'élément (5) qui procure une isolation thermique et le produit de laminage ou bien à côté de l'élément (5) qui procure une isolation thermique, est disposé au moins un élément de protection (6), en particulier sous la forme d'une nervure ou d'une latte.

7. Unité de laminage à chaud conformément à la revendication 6, **caractérisée en ce que** l'élément de protection (6) est relié à l'élément (5) qui procure une isolation thermique.

8. Unité de laminage à chaud conformément à la revendication 6 ou 7, **caractérisée en ce que** sont présents plusieurs éléments de protection (6) qui sont reliés les uns aux autres.

9. Unité de laminage à chaud conformément à l'une quelconque des revendications 6 à 8, **caractérisée en ce que** ledit au moins un élément de protection (6) est constitué d'un matériau qui résiste aux chocs thermiques.

10. Unité de laminage à chaud conformément à l'une quelconque des revendications 6 à 9, **caractérisée en ce que** ledit au moins un élément de protection (6) est équipé d'un refroidissement.

11. Unité de laminage à chaud conformément à l'une quelconque des revendications 6 à 10, **caractérisée en ce que** sont présents une multitude d'éléments de protection (6) entre deux cages de laminoir (2, 3, 4) ; dans laquelle les éléments de protection (6) qui se suivent les uns les autres dans la direction de transport (F) entre deux cages de laminoir (2, 3, 4) sont disposés en décalage les uns par rapport aux autres dans la direction en largeur du produit de laminage.

12. Unité de laminage à chaud conformément à l'une quelconque des revendications 6 à 11, **caractérisée en ce que** les éléments de protection (6) s'étendent en ligne droite et/ou forment un angle (a) de préférence entre 0° à 45° par rapport à la direction de transport (F).

13. Unité de laminage à chaud conformément à l'une quelconque des revendications 1 à 12, **caractérisée en ce que** ledit au moins un élément (5) qui procure une isolation thermique est disposé de manière à pouvoir pivoter et/ou de manière à pouvoir se déplacer par translation.

14. Unité de laminage à chaud conformément à l'une quelconque des revendications 1 à 13, **caractérisée en ce que** la zone située entre deux cages de laminoir (2, 3, 4) est de préférence exempte d'un transporteur à rouleaux.

15. Unité de laminage à chaud conformément à l'une quelconque des revendications 1 à 14, **caractérisée en ce que** la zone située entre deux cages de laminoir (2, 3, 4) est munie d'une table de transfert, d'une table de guidage et/ou d'une table looper.

16. Unité de laminage à chaud conformément à l'une quelconque des revendications 1 à 15, **caractérisée en ce que** ledit au moins un élément (5) qui procure une isolation thermique présente une matière céramique ou est constitué d'une telle matière.

17. Unité de laminage à chaud conformément à l'une quelconque des revendications 1 à 16, **caractérisée en ce que** ledit au moins un élément (5) qui procure une isolation thermique est muni d'une tôle de protection (7) pour lui fournir une protection contre l'eau.

18. Unité de laminage à chaud conformément à l'une quelconque des revendications 1 à 17, **caractérisée en ce que** ledit au moins un élément (5) qui procure une isolation thermique représente un élément d'isolation par absorption.

19. Unité de laminage à chaud conformément à l'une quelconque des revendications 1 à 17, **caractérisée en ce que** ledit au moins un élément (5) qui procure une isolation thermique représente un élément d'isolation par réflexion.

20. Unité de laminage à chaud conformément à l'une quelconque des revendications précédentes, **caractérisée en ce que** les capots d'isolation sont réchauffés au sein du train finisseur par l'intermédiaire de bandes de mise en route, respectivement faisant office d'amorces, avant de procéder au laminage de bandes thermosensibles (par exemple des bandes minces) qui utilisent les capots d'isolation réchauffés.

21. Unité de laminage à chaud conformément à l'une quelconque des revendications précédentes, **caractérisée en ce que** l'effet des capots qui procurent une isolation thermique au sein du train finisseur sont pris en compte par un modèle opératoire pour le positionnement du train de laminoir et/ou lors de la modification dynamique de la température au cours du processus de laminage.

22. Unité de laminage à chaud conformément à l'une quelconque des revendications précédentes, **caractérisée en ce que** l'on met en œuvre l'isolation thermique au sein du train finisseur de préférence dans le cas d'un laminage sans fin, dans des conditions d'un courant massique du produit, exprimé sous la forme de l'épaisseur x la vitesse, inférieur à 650 mm x m/min, et en particulier de manière avantageuse dans des conditions d'un courant massique inférieur à 500 mm x m/min.
